(19) **Europäisches Patentamt / European Patent Office / Office européen des brevets**

(11) **EP 2 913 296 B1**

(12) **EUROPEAN PATENT SPECIFICATION**

(45) Date of publication and mention
of the grant of the patent:
**18.10.2017 Bulletin 2017/42**

(51) Int Cl.:
***B81C 1/00*** *(2006.01)*      ***G02B 7/182*** *(2006.01)*
***G02B 26/08*** *(2006.01)*

(21) Application number: **14175554.6**

(22) Date of filing: **03.07.2014**

(54) **Metal elastic member and miniature machine**

Elastisches Metallelement und Miniaturmaschine

Élément métallique élastique et machine miniature

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **26.02.2014 JP 2014035171**

(43) Date of publication of application:
**02.09.2015 Bulletin 2015/36**

(73) Proprietor: **Hokuyo Automatic Co., Ltd.
Osaka 540-0028 (JP)**

(72) Inventor: **Asada, Norihiro
Osaka 540-0028 (JP)**

(74) Representative: **Betten & Resch
Patent- und Rechtsanwälte PartGmbB
Maximiliansplatz 14
80333 München (DE)**

(56) References cited:
**JP-A- 2001 226 718      JP-A- 2011 191 422
US-A- 5 982 521       US-A1- 2003 006 360
US-A1- 2007 268 950     US-A1- 2008 239 446
US-A1- 2013 286 151     US-B1- 6 201 629**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

Background of the invention

Field of the invention

The present invention relates to a metal elastic member and a miniature machine and, for example, relates to a metal elastic member and a miniature machine which are used for repetitively scanning light within a predetermined angle range.

A miniature machine such as a scanning light deflection element to be manufactured by using the MEMS (Micro Electro Mechanical Systems) technique includes at least one movable unit, a fixed unit, and paired beams for supporting the movable unit at the respective ends with respect to the fixed unit. The movable unit is configured to be swingable about an axis with paired beams serving as torsional rotation axes. In other words, the beams serve as torsion beams in a gimbal structure.

For example, in a miniature machine in which the movable unit is configured by a light deflecting mirror for deflecting and scanning incident light and a flat coil and the movable unit supported by the beams, that is, the light deflecting mirror is repetitively swung by Lorentz force that acts on the coil by an alternating current flowing to the coil and a magnetic field formed by the permanent magnets provided in the fixed unit.

Japanese Unexamined Patent Publication No. 2003-84226 proposes an optical scanner having a movable unit and a beam formed integrally by applying a semiconductor manufacturing technique to a single crystal silicon substrate.

Japanese Unexamined Patent Publication No. 9-281417 proposes a micro mirror device in which a beam is fabricated by using a conductive amorphous aluminum alloy in a monolithic manufacturing process.

Japanese Unexamined Patent Publication No. 2009-175368 proposes a vibration mirror including a beam obtained by pressing pure titanium or a titanium alloy.

US 6 201 629 B1 discloses a torsional micromechanical mirror system which includes a mirror assembly rotatably supported by a torsional mirror support assembly for rotational movement over and within a cavity in a base. The cavity is sized sufficiently to allow unimpeded rotation of the mirror assembly. The mirror assembly includes a support structure for supporting a reflective layer. The support structure is coplanar with and formed from the same wafer as the base. The torsional mirror support assembly includes at least one torsion spring formed of an electroplated metal. An actuator assembly is operative to apply a driving force to torsionally drive the torsional mirror support assembly, whereby torsional motion of the torsional mirror support assembly causes rotational motion of the mirror assembly.

US 5 982 521 A discloses an optical scanner in which a magnet is integrally formed with a mirror surface for reflecting off a laser beam. A torsion spring holds the magnet thereon. The torsion spring is made of a shape-memory alloy. A coil generates an alternating magnetic field so as to oscillate the magnet about the torsion spring. The oscillating magnet scans the light beam.

US 2007/268950 A1 discloses a miniature Q-switched, pulsed laser, having a two arm folded resonator, in which Q-switching is effected by rapidly and reciprocally tilting a resonator mirror of the laser about an axis perpendicular to the axis of the laser resonator. The angular excursion of the tilting and the frequency of the tilting are selected cooperative with dimensions of the resonator to maximize energy and symmetry of intensity distribution in Q-switched pulses delivered by the laser. Rapid reciprocal tilting of the mirror is accomplished using a piezoelectrically-driven, MEMS scanner operated in a resonant mode.

US 2003/006360 A1 relates to a gimbal for supporting a moveable mirror which includes an attachment section, first and second pairs of beams extending along the x-axis and connected to the attachment section, and third and fourth pairs of beams extending along the y-axis connected with the first and second pair of beams. The connections are such that the mirror can tilt or rotate about both the x-axis and y-axis.

US 2008/239446 A1 relates to a micromechanical device which includes a micromechanical functional structure, which can be deflected about a main axis from a rest position, a movable electrode, which is mounted to the micromechanical functional structure, and a fixed electrode, which can be tilted about a tilting axis with respect to the movable electrode in the rest position, wherein the tilting axis is parallel to the main axis or is identical with the main axis.

JP 2001 226718 A, in order to produce a high strength austenitic stainless steel sheet excellent in flatness after etching by a simple method without requiring equipment used exclusively for tension annealing, provides an annealed austenitic stainless steel strip which is subjected to cold rolling at a rate of decrease in thickness of 5% or more, is thereafter modified at an elongation percentage of 0.08% or more by a tension leveler, is successively subjected to threading treatment for imparting tension equivalent to 0.7 to 1.0 times the 0.2% proof stress of the cold rolling stock applied and is moreover subjected to annealing treatment at a material temperature of 700 to 800 °C.

JP 2011 191422 A, in order to provide a compact optical deflector that allows a resonance frequency of a deflecting mirror to be changed, discloses an optical deflector that includes: a mirror substrate which has a deflecting mirror to deflect a light beam from a light source by reciprocally vibrating first torsion beam members; an outer frame member which holds the mirror substrate; and second torsion beam members and whose outsides are fixed to and held with a frame member and insides are joined with both sides of the outer frame member.

Description of the related art

Japanese Unexamined Patent Publication No. 2007-206670 discloses a structure in which a high heat conduction film is formed in a movable unit and heat is radiated through an elastic coupling unit in order to eliminate a problem in that a part of light with which the movable unit is irradiated is changed to heat to raise a temperature of the movable unit, resulting in stable drawing with difficulty when light scanning is carried out to execute drawing by an optical device using a torsional vibrator.

In a case where there is configured a small-sized scanning type distance measuring device using the light deflecting mirror or an obstacle detecting device using the scanning type distance measuring device, it is necessary to swing a deflecting mirror of several mm square at a comparatively low frequency of 150 Hz to 500 Hz, thereby scanning with measurement light within a scanning angle range of 45°, for example.

However, the beam fabricated by using a silicon material described in Japanese Unexamined Patent Publication No. 2003-84226 is a suitable material for a case where it is necessary to drive a movable unit having a comparatively small-sized deflecting mirror of approximately 5 mm square, for example, at a comparatively high frequency and has a problem in that stable driving cannot be carried out in a case where a movable unit having a comparatively large-sized deflecting mirror of 10 mm square, for example, is driven at a frequency of 500 Hz or less, and also has a problem in that it is hard to use the beam for a demand of a shock resistance because the silicon material causes cleavage comparatively easily.

The beam using the conductive amorphous aluminum alloy described in Japanese Unexamined Patent Publication No. 9-281417 has a problem in that the beam is fabricated in the monolithic manufacturing process so that a manufacturing cost is increased, and furthermore, has a problem in that the beam is hard to be used in measurement requiring a beam diameter to some extent because a size including a light deflecting mirror of about 10 to 20 $\mu$m square is very small.

Referring to the beam obtained by pressing a metal described in Japanese Unexamined Patent Publication No. 2009-175368, a large number of minute concavo-convex portions or scratches are formed on a surface thereof in the working and stress concentrates depending on stress amplitude thereon. For this reason, there is a problem in that the minute concavo-convex portions or scratches act as starting points to grow a crack due to repetitive use and a fatigue failure thus tends to occur.

In particular, an optical scanner for scanning with measurement light to detect the presence of an obstacle based on reflected light corresponding to the measurement light is operated continuously for a long period of time. For this reason, even if the optical scanner is used at a frequency of 100 Hz, for example, it is necessary to resist stress amplitude three billion times per year.

For this reason, these metal components are usually subjected to a life test tens of thousands of times to hundreds of thousands of times or millions of times to tens of millions of times, and the life test for several tens of hours or several hundreds of hours in conversion into a time, and are used within a range in which a safety factor calculated based on the result is taken into consideration. In recent years, however, it is indicated that the safety factor is lacking in evaluation depending on stress amplitude millions of times to tens of millions of times.

A crack originating from a scratch on a surface or the like is referred to as a high cycle fatigue and a crack originating from a crystal defect in an inner part or the like is referred to as a Very High Cycle Fatigue, and hundreds of millions of times or billions of times of tests are required for evaluation. Consequently, a time required for the test also becomes enormous and it is actually difficult to guarantee a life to that extent.

Therefore, the present inventor found that the beam capable of swinging the movable unit within a comparatively low frequency range is constituted by a metal elastic member having a long life and a high reliability, and proposes a metal bar having a fixed unit pad that is provided at a first end and a movable unit pad that is provided at a second end in order to support the movable unit so as to be swingable, that is, a metal bar molded to have a sectional area of 1 mm$^2$ or less by using a physical or chemical processing method excluding a mechanical processing method (Japanese Patent Application No. 2012-247796).

Even if the metal bar is used as a torsional beam to swing the movable unit at a comparatively low frequency of 150 Hz to 500 Hz, any problem is not caused. However, there is caused a problem in that swing amplitude is reduced remarkably when the swing is carried out at a higher frequency, for example, a frequency exceeding 1 kHz. The metal constituting the beam generates heat by internal friction so that a temperature is raised, a resonance frequency is reduced greatly and a swing angle is decreased.

When the temperature of the metal is raised remarkably, generally, a fatigue limit or a rupture limit is decreased so that a life thereof is reduced. In the worst case, there is a fear that rupture might be caused. Moreover, a Young's modulus also tends to be decreased with the temperature. In a case of the use as a spring described above, a spring constant is varied. As a result, it is estimated that a swing angle is reduced.

A heating quantity Q of the internal friction generated in the metal bar can be expressed by a function of f and $\sigma$ as in the following equation, wherein f represents a frequency and $\sigma$ represents a stress with a displacement angle $\theta$.

$$Q = F(f, \sigma(\theta))$$

In other words, if the frequency f is reduced or the displacement angle θ is decreased, it is possible to reduce the heating quantity of the metal bar. However, the degree of freedom of design is restricted considerably. Therefore, it is impossible to easily restrict the frequency f or the displacement angle θ.

Therefore, it is also proposed to employ the heat radiation structure described in the Japanese Unexamined Patent Publication No. 2007-206670. However, heat transfer in a solid body can be rarely expected in the metal bar formed thinly in an extremely small sectional area which is equal to or smaller than several $mm^2$. Therefore, the heat radiation structure cannot act substantially.

Moreover, a very small-sized metal bar itself generates heat by internal friction. For this reason, it is physically hard to dispose a cooling mechanism such as a cooling fan. In addition, there is also a fear that a swing state might fluctuate by wind pressure.

Therefore, there is also a problem in that a resonance frequency is varied and swing and driving cannot be executed at a target frequency when a surface area of the metal bar is increased, that is, the metal bar is formed widely in order to enhance heat radiation characteristics through radiation or convection.

Summary of the invention

The invention is defined in the appended claims.

In consideration of the problems, it is an object of the present invention to provide a metal elastic member capable of efficiently radiating heat generated by internal friction and being stably operated for a long period of time, and a miniature machine using the metal elastic member.

Brief description of the drawings

FIG. 1 is a perspective view showing a miniature machine according to the present invention;
FIGS. 2A to 2E are views for explaining a process for fabricating a metal elastic member according to the present invention;
FIGS. 3A to 3C are views for explaining an attaching process for attaching a movable unit to a fixed unit with the metal elastic member being interposed therebetween;
FIG. 4 is an exploded perspective view showing the miniature machine according to the present invention;
FIG. 5A is a plan view showing main parts of the movable unit (a coil substrate) and the metal elastic member;
FIG. 5B is a sectional view showing the main parts of the movable unit (the coil substrate) and the metal elastic member;
FIG. 5C is a sectional view showing main parts of a movable unit (the coil substrate) and a metal elastic member according to another embodiment.
FIG. 6 is a view for explaining a swinging operation of the movable unit;
FIG. 7 is a view for explaining a site in which the metal elastic member is attached to the fixed unit;
FIG. 8 is an exploded perspective view showing a miniature machine according to another embodiment;
FIG. 9 is a perspective view showing the miniature machine according to another embodiment;
FIG. 10 is a view for explaining a metal elastic member according to another embodiment;
FIG. 11A is an S -- N chart showing a result of a rupture test:
FIGS. 11B and 11C are characteristic charts showing a simulation result, illustrating a relationship between a sectional area of a beam and a resonance frequency;
FIG. 12A is a view for explaining a width, a length and a pitch of a projection of the metal elastic member:
FIG. 12B is a view for explaining a metal elastic member according to a further embodiment;
FIG. 13 is a view for explaining a metal elastic member according to a further embodiment; and
FIG. 14 is a characteristic chart showing a resonance frequency and a maximum principal stress in the metal elastic member through numerical analysis.

Description of the embodiments

A metal elastic member and a miniature machine using the metal elastic member according to the present invention will be described below with reference to the drawings.

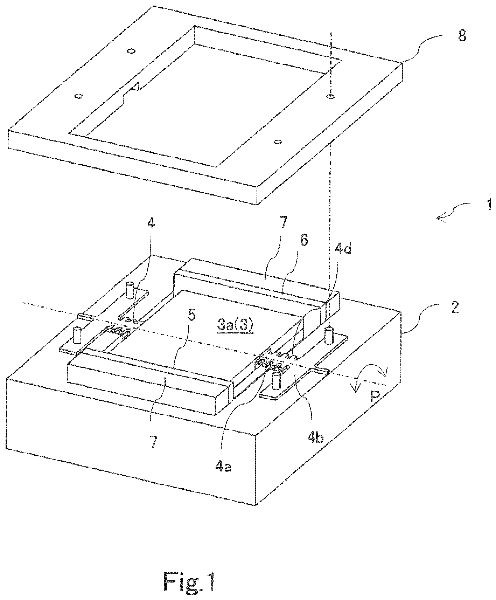

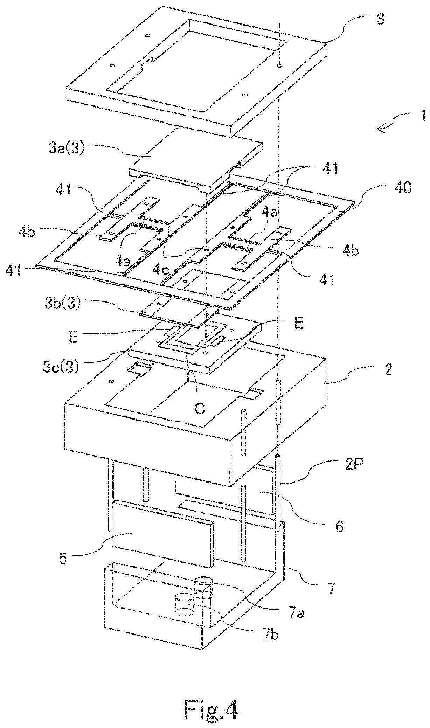

FIGS. 1 and 4 show a miniature machine 1 to be used for a scanning type distance measuring device or the like. The miniature machine 1 includes a frame serving as a fixed unit 2, a flat plate body serving as a movable unit 3, paired beams 4, 4 for supporting the movable unit 3 so as to be swingable about an axis P with respect to the fixed unit 2, permanent magnets 5 and 6 that are disposed at the respective ends of the movable unit 3 with the beams 4, 4 being sandwiched therebetween, an upper cover 8, and the like.

The fixed unit 2 is configured by a rectangular parallelepiped member made of resin such as polycarbonate. An open space is hollowed out in a thickness direction in a slightly larger area than the movable unit 3 as seen on a plane in a central part of the fixed unit 2, and the movable unit 3 is disposed in the open space.

The beams 4, 4 are configured by a metal elastic member. The metal elastic member includes a metal bar 4a having a predetermined length, a fixed unit pad 4b which is provided at a first end of the metal bar 4a and is fixed to the fixed unit 2, and a movable unit pad 4c which is provided at a second end of the metal bar 4a and is fixed to the movable unit 3.

The permanent magnets 5 and 6 are disposed opposite to each other in a magnetic retainer 7 taking a sectional shape of "U" and configured by a member having high magnetic permeability in such a manner that the permanent magnet 5 serves as the north pole and the permanent magnet 6 serves as the south pole. The permanent magnets 5 and 6 are inserted from below and fixed into the open space in the fixed unit 2 so as to have the movable unit 3 sandwiched therebetween.

The movable unit 3 includes a deflecting mirror 3a that is configured by a glass substrate or a silicon substrate with gold, aluminum, or the like being deposited thereonto, a coil substrate 3c that is configured by a glass epoxy substrate with a copper wire coil C and electrode pads E being printed thereon, and a spacer 3b that is also made of glass epoxy and is interposed therebetween.

The movable unit pads 4c of the paired beams 4, 4 are positioned so as to be in contact with the electrode pads E, respectively, and are bonded and fixed between the deflecting mirror 3a and the coil substrate 3c by a conductive adhesive agent. Alternatively, the coil substrate 3c may be configured by a multiple layered substrate having substrate layers that are made of epoxy resin or the like, and are provided respectively with coil patterns and coils coupled together by means of a via.

When an alternating current is applied to the coil C through paired beams 4, 4, Lorentz force acts on the coil C by the alternating current flowing to the coil C and a magnetic field formed by the permanent magnets 5 and 6 provided on the fixed unit 2 so that the movable unit 3 supported by the beams 4, 4 is repetitively swung by the Lorentz force.

In other words, the miniature machine 1 includes at least one movable unit 3, the fixed unit 2 and the paired beams 4, 4 supporting the movable unit 3 at the respective ends with respect to the fixed unit 2. The movable unit 3 is configured to be swingable about the axis P with the beams 4 serving as torsional rotation axes. The beams 4, 4 each serve as a supporter of the movable unit 3, a conductor for flowing current to the coil C, and a spring for returning the movable unit 3 to a reference position. The movable unit 3 is further provided with a light deflecting surface for reflecting incident light to deflect the reflected light and scan with the light.

A frequency for driving to swing the movable unit 3, that is, a frequency of the alternating current to be applied to the coil C is preferably set to be a frequency which is slightly shifted from a mechanical resonance frequency of the beams 4, 4 including the movable unit 3, and can be set within a range of 10 Hz to approximately 1.8 KHz depending on a size of the movable unit 3, a sectional area and a length of the metal bar 4a, and a physical characteristic thereof.

For example, in the case where an area of a movable mirror is 12 mm x 12 mm and the case where the metal elastic member according to the present invention is used for the beams 4, a frequency of 150 Hz to 500 Hz, is suitable.

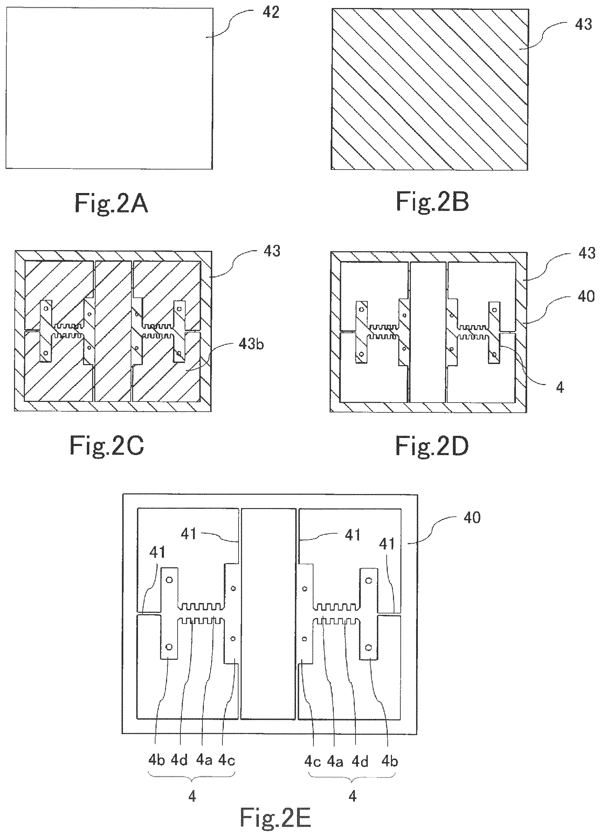

As shown in FIG. 2E, in the beams 4, 4, a pair of the metal bars 4a having the fixed unit pad 4b provided at the first end and the movable unit pad 4c provided at the second end are disposed symmetrically on a straight line in a frame 40 and the respective pads 4b and 4c are formed integrally so as to be fixed to the frame 40 through a support unit 41.

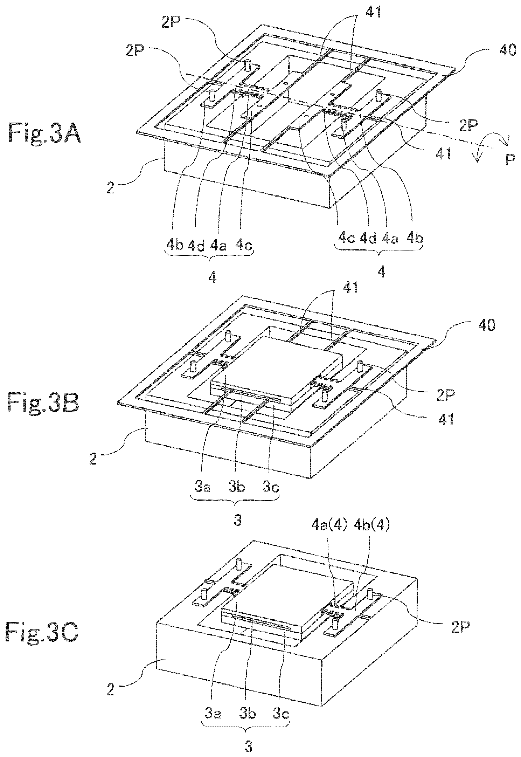

As shown in FIG. 3A, first of all, paired positioning pins 2p provided on the fixed unit 2 are fitted, bonded and fixed into paired positioning hole portions formed on the respective fixed unit pad 4b.

As shown in FIG. 3B, next, paired positioning pins formed on a back face of the deflecting mirror 3a are fitted from above paired positioning hole portions provided on the movable unit pad 4c, the spacer 3b is then put via the open space from below the movable unit pad 4c, the positioning pins of the deflecting mirror 3a are further fitted into paired positioning hole portions formed on the coil substrate 3c, and they are bonded and fixed with an adhesive agent, respectively.

As shown in Fig. 3C, thereafter, each support unit 41 is cut so that the frame 40 is removed, and an upper cover 8 (See FIG.1) is further put from above the fixed unit 2 so that the fixed unit pad 4b is fixed reliably. The movable unit 3 can be supported in a state in which the linearity of the torsional rotation axis configured by a pair of the metal bars 4a is maintained with high accuracy. In addition, an assembling work can also be simplified.

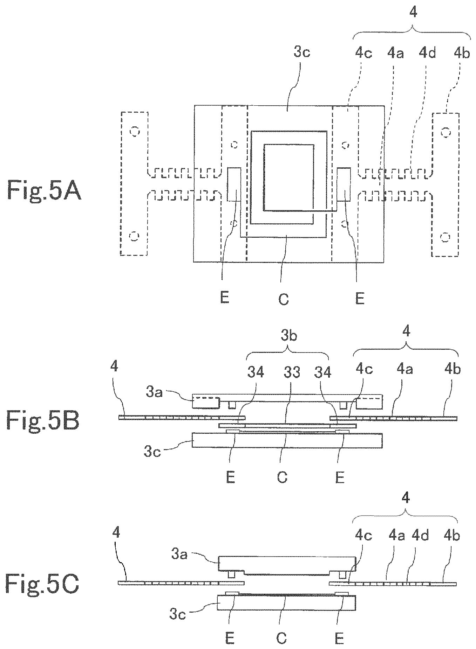

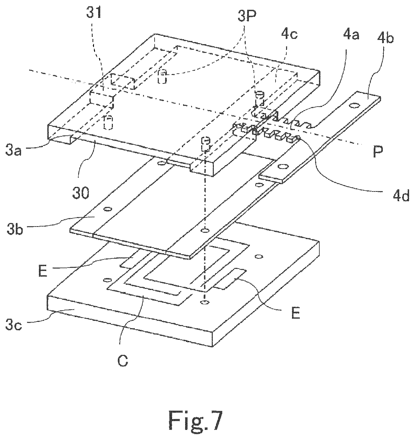

FIGS. 5A and 5B show a state in which the electrode pads E formed on the coil substrate 3c and the movable unit pads 4c provided at the second end of the beams 4, 4 are positioned and disposed so as to be electrically in contact with each other through the spacer 3b. The spacer 3b has a central part formed by an insulating member 33 and both ends configured by a metal member 34. Each of the electrode pads E, E and each of the movable unit pads 4c, 4c are electrically connected to each other through metal members 34, 34. The structure will be described later in detail with reference to FIG. 7.

As shown in FIG. 3C, the positioning pin 2p provided on the fixed unit 2 is an electrode pin which is configured by a metal and serves to apply an alternating current to the coil C formed on the coil substrate 3c through the beams 4, 4.

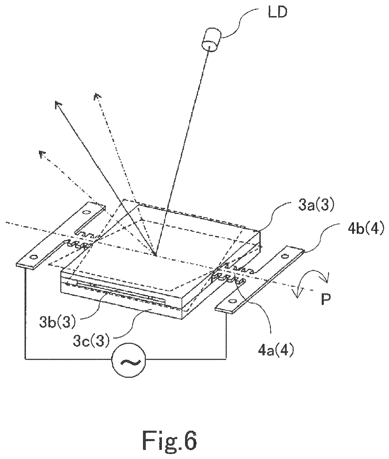

As shown in FIG. 6, when measurement light formed into parallel light through an optical lens (not shown) from a light emitting device LD such as a laser diode is incident on the deflecting mirror 3a and an alternating current is applied to the coil C, the deflecting mirror 3a is swung about the axis P with the beams 4, 4 serving as the torsional rotation axes, the incident light emitted from the light emitting device LD is deflected by the deflecting mirror 3a and reflected light is deflected and used to scan at an angle which is a double of a swing angle of the deflecting mirror 3a. For example, if the swing angle of the deflecting mirror 3a is set to be ±11.25°, the reflected light is used to scan within a scanning angle range or ±22.5°.

The beams 4, 4 are formed by a physical or chemical processing method excluding a mechanical processing method such as press working by using any of metals including a stainless material, a carbon tool steel material and a cold-reduced carbon steel sheet material which are rolled by a tension annealing method. The tension annealing method indicates treatment for leaving the stainless material or the like for a certain period of time in a nitrogen gas atmosphere containing a hydrogen gas at a high temperature while applying constant tensile stress thereto. For the physical or chemical processing method, there are suitably used a focused ion beam method, an etching method and a plating method (an electroforming method).

FIGS. 2A to 2E show a process for fabricating a metal elastic member constituting the beams 4, 4 by using the etching method according to an example of the chemical processing method. In the present example, a tension annealing material of SUS304CSP-H is used.

A photoresist 43 is uniformly applied onto a surface of a stainless thin plate 42 (see FIG. 2A) having a predetermined thickness (0.2 mm in the present embodiment) (see FIG. 2B) and light exposure is carried out through a photomask (not shown) formed in such a manner that regions corresponding to the metal bar 4a, the fixed unit pad 4b, the movable unit pad 4c, the frame 40 and the support unit 41 are shielded (see FIG. 2C).

When a photoresist 43b in the exposed region is removed with a predetermined etchant, a photoresist 43 layer is formed in only regions corresponding to the frame 40 and the beams 4 in the surface of the stainless thin plate 42 (see FIG. 2D).

Then, an etchant for dissolving stainless is sprayed onto the surface of the stainless thin plate 42 to gradually progress etching treatment. When the etching treatment is completed, the photoresist 43 is removed with a solvent. By the foregoing process, there can be formed a metal elastic member in which a pair of the metal bars 4a having the fixed unit pad 4b provided at the first end and the movable unit pad 4c provided at the second end are disposed symmetrically on a straight line in the frame 40, and the respective pads 4b and 4c are formed integrally so as to be fixed to the frame 40 through the support unit 41 (see FIG. 2E).

In the case where the metal elastic member is fabricated by using the plating method, there is created a mold frame having a predetermined depth in which the photoresist 43 shown in FIG. 2D takes a shape of a concave portion, a mold release agent is applied onto the mold frame and an electrolytic solution containing a metal ion is then filled therein to electrodeposit a metal in the electrolytic solution. Thus, the metal elastic member can be fabricated.

When the metal bar 4a constituting the beam 4 is formed by a mechanical processing (plastic processing) method such as press working or cut working, concentration of a stress is caused by stress amplitude in a plurality of very small scratches formed on the surface in the processing and a crack is thus grown with the very small scratches set as starting points. Consequently, a fatigue strength is reduced. Therefore, the movable unit 3 cannot be swung stably for a long period of time.

If the metal bar 4a serving as the beam is formed by using the physical or chemical processing method excluding the mechanical processing method, however, there is a very low probability that such a scratch as to grow a crack might be formed on the surface due to the stress amplitude. Accordingly, there is a very small fear that the fatigue strength might be reduced.

In general, various properties of a metallic material, for example, a yield strength and the like are measured based on a specimen having a diameter of 10 mm (a sectional area of 78.5 $mm^2$). However, a yield strength of a specimen fabricated in at least a dimension of one digit or less (a diameter of 1 mm (a sectional area of 0.787 $mm^2$) or less) of the specimen tends to have a greater value than a published value, and it can be assumed that the sectional area is set to be very small and an effective yield strength thus has a greater value by several tens %.

The following is qualitatively understood. If an existence probability of a scratch on a surface of a target is constant, the absolute number of scratches to be base points of cracks of a Very High Cycle Fatigue is decreased with reduction in a surface area which is caused by decrease in a size. If a defect probability in an inner part of the target is equal, alternatively, the absolute number of internal defects to be the base points of the cracks of the Very High Cycle Fatigue is decreased with reduction in a volume. As a result, durability or a yield strength is increased.

Although there is a limit, it can be supposed that a smaller substance approximates to an original physical property value of the substance more greatly. The present inventor has confirmed, by an experiment, that a fatigue limit in a torsion direction obtained by a specimen having a diameter of 10 mm has a mechanical angle of ±9.25°, while a metal beam having a section of 0.2 mm x 0.25 mm with the use of the same metallic material has a mechanical angle of ±15.5°.

In consideration of the experiential knowledge of the skilled in the art that a maximum stress of a torsional portion is approximately 1.4 times as high as an ordinary stress and a strength is increased by approximately 20% if a sectional dimension is reduced by one digit, a fatigue limit is increased to be approximately 1.2 x 1.2 = 1.4 times as high as an ordinary fatigue limit because of a size effect which is smaller by two digits. The increase in the durability and the yield strength is supported by a result obtained through the execution of an experiment from the general qualitative understanding to quantitative understanding.

By molding the metal bar to have a sectional area of 1 mm² or less, therefore, it is possible to correspondingly constitute a beam exhibiting an excellent effective yield strength. Consequently, the movable unit 3 can be swung stably for a long period of time within a frequency of 150 Hz to 500 Hz. A swing angle of the deflecting mirror 3a constituting the movable unit 3 is not limited to be ±11.25° but has a value set properly depending on the intended use of the miniature machine 1.

It is sufficient that the metal bar 4a constituting the beams 4, 4 shown in FIG. 2E is formed to have a sectional area of 1 mm² or less, and it is preferable that the metal bar 4a should be molded within a range of 0.001 mm² to 1 mm².

In the present embodiment, the metal bar 4a is formed to have a width W of 1.0 mm, a thickness T of 0.2 mm, a length L of 5 mm and a sectional area S of 0.20 mm². Each unit of the miniature machine 1 has a size as follows. The fixed unit 2 is formed to have a width of 23 mm, a depth of 26 mm and a thickness of 5.5 mm, and the movable unit 3 is formed to have a width of 12.0 mm, a depth of 12.0 mm and a thickness of 2.0 mm.

The metal bar 4a constituting the metal elastic member according to the present invention further has a plurality of plate-shaped projections 4d formed in extension in an intersecting direction with a torsional rotation axis, that is, a longitudinal direction of the metal bar 4a. The projection 4d is fabricated in the procedure described with reference to FIGS. 2A to 2E and is formed to have a width of 0.5 mm, a length of 0.5 mm and a thickness of 0.2 mm.

The projection is displaced in an atmosphere with the swing of the beam 4 so that convective heat transfer is generated in a flow of wind at this time. By utilizing the phenomenon, it is possible to efficiently carry out cooling through radiation of heat generated by internal friction to air with a torsional operation of the metal bar 4a. Even if the swing is executed within a range of a frequency of 500 Hz to several kHz, consequently, it is possible to avoid reduction in the resonance frequency due to the heat generation. Thus, it is possible to continuously execute the torsional operation stably for a long period of time. In other words, the projection 4d functions as a radiation fin.

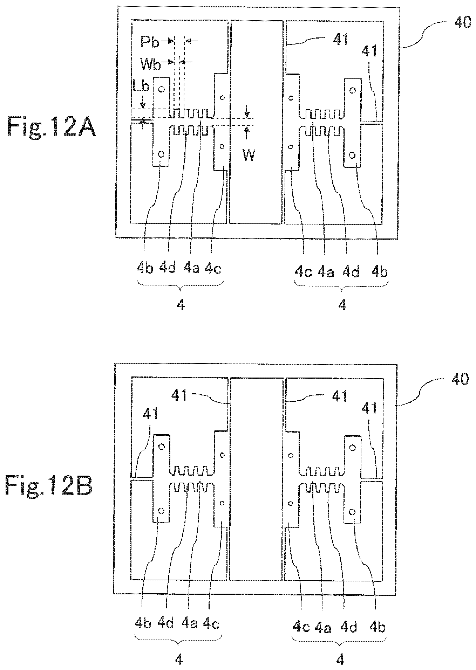

As shown in FIG. 12A, a maximum width Wb of the projection 4d is preferably set to be equal to or smaller than 1.5 times a width W of the metal bar 4a, and more preferably 0.5 to 1.0 time the width W of the metal bar 4a, and a maximum length Lb of the projection 4d is preferably set to be equal to or smaller than three times the width W of the metal bar 4a, and more preferably 0.5 to 1.5 times the width W of the metal bar 4a.

While fulfilling the above-mentioned conditions, and furthermore, an array pitch Pb of the projection 4d is preferably set to be equal to or more than 0.5 time the width W of the metal bar 4a, and more preferably 0.75 to 1.5 times the width W of the metal bar 4a. When the array pitch Pb is increased, the number of the projections 4d is decreased so that a heat radiation effect is reduced.

When the width of the projection 4d is greater than the width W of the metal bar 4a, there is a great fear that swing cannot be executed smoothly upon receipt of wind pressure. When the length of the projection 4d is greater than three times the width W of the metal bar 4a, inertia force in the swing is increased so that there is a great fear that the swing cannot be executed smoothly. In other words, driving cannot be carried out at a target swing frequency. If setting to the range is executed, accordingly, it is possible to carry out stable driving at a target swing frequency while properly radiating heat.

The projection 4d is preferably formed on the metal bar 4a in such a manner that a spring constant of the metal bar 4a is regulated into a range of ±5 % of the spring constant of the metal bar having no projection 4d formed thereon, that is, a metal bar having a width W of 1.0 mm, a thickness T of 0.2 mm, a length L of 5 mm and a sectional area S of 0.20 mm², and preferably, a range of ±3 %.

If the projection 4d is formed in extension on the metal bar 4a so that the spring constant of the metal bar 4a is greatly changed from that of a metal bar having no projection 4d formed thereon, it is hard to carry out driving at a target swing frequency in swing driving of a movable unit through a torsional operation of the metal bar. Consequently, there is caused a complicated work for newly designing the metal bar. If the projection is formed in extension within a range in which a fluctuation in the spring constant is ±5 %, however, the degree of freedom of design can be prevented from being reduced.

Although all of FIGS. 1 to 9 show the projection 4d taking the same rectangular shape, the shape of the projection 4d is not restricted to the rectangular shape but an optional shape can be employed.

For example, as shown in FIG. 12B, it is also possible to take a trapezoidal shape in which a tip side has a smaller width than a base end side or an inverted trapezoidal shape in which the tip side has a greater width than the base end side. In addition, it is also possible to take a triangular shape having a sharp tip.

Moreover, there is described the example in which the projections 4d are formed at both left and right ends of the metal bar 4a in a symmetrical shape at an equal pitch. Within a range in which a moment of inertia in a forward or backward direction acting on the metal bar 4a in the swing of the movable unit is not unbalanced greatly, however, the formation positions of the projections 4d on left and right may be shifted slightly or all of the projections do not need to be formed in identical shapes.

Furthermore, the projection 4d is not formed at both of the left and right ends of the metal bar 4a but may be formed vertically on upper and lower surfaces of the metal bar 4a. In this case, it is hard to carry out the formation by an etching method. Therefore, it is possible to use a plating method of carrying out fabrication by applying a mold release agent onto a mold frame formed by means of a 3D printer and then filling an electrolytic solution containing a metal ion therein to electrodeposit a metal in the electrolytic solution.

It is sufficient that the direction of the extension of the projection 4d is equivalent to an intersecting direction with the longitudinal direction of the metal bar 4a, and the projection 4d does not need to be always formed in vertical extension. It is sufficient that the projection 4d is formed to enable heat radiation in contact with the atmosphere when the metal bar 4a executes swing.

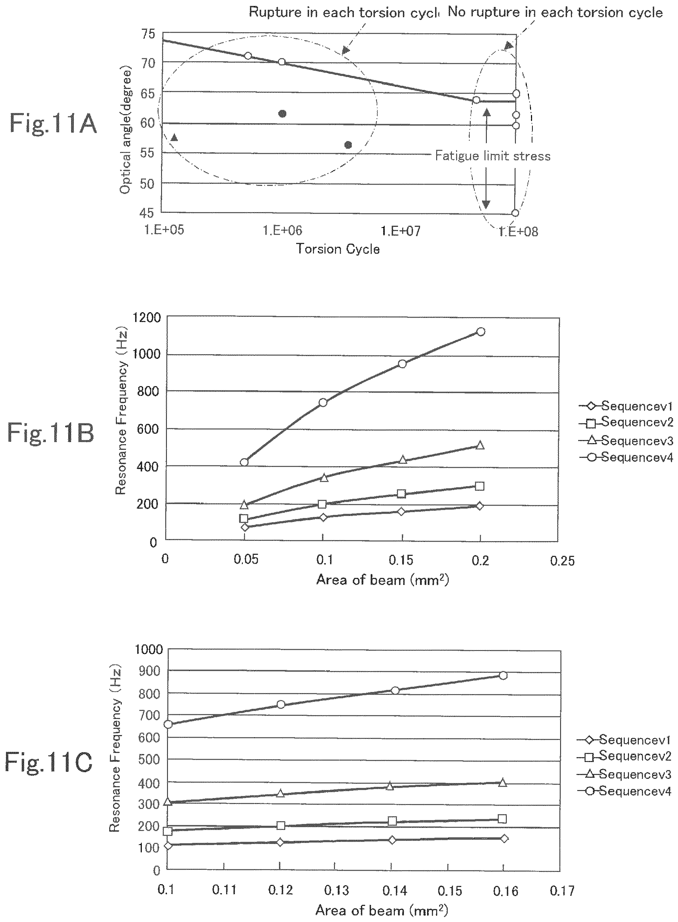

FIG. 11A is an S-N chart showing a result of a rupture test in the case where the beam 4 having a sectional area of 0.05 mm$^2$ and a length of 4 mm and having no projection 4d formed thereon is used to swing the deflecting mirror 3a having an area of 144 mm$^2$ (12 mm x 12 mm) at a driving frequency of 200 Hz (an average resonance frequency: 188.6 Hz).

A white circle indicates a characteristic of a beam configured by the SUS304CSP-H tension annealing material and a black circle indicates a characteristic of a beam configured by the SUS304CSP-H stress release material, and a black triangle indicates a characteristic of a beam configured by a CoNi alloy material subjected to aging treatment (a material which is well-known to have high durability). An optical angle of an axis of ordinates indicates a total swing angle of measurement light. For example, in the case of an optical angle of 60°, the swing angle of the measurement light is ±30° and a swing angle of a deflection plate is ±15°.

As a result of the test, the black circle and the black triangle reach a rupture. On the other hand, although the rupture is reached at an optical angle of 70° or more in the case of the white circle (the tension annealing material), there is no sample reaching the rupture even if 100 million times of a swing cycle are exceeded in the case of an optical angle of 65° or less. As shown in the white circle and the black circle at an optical angle of 62°, it is apparent that a rupture cycle is changed by two digits or more depending on the presence of tension anneal even if suitable stainless SUS304CSP-H is used as a spring material.

FIGS. 11B and 11C show a result of a simulation for a resonance frequency in the case where the area of the deflecting mirror 3a, the sectional area of the beam and the length of the beam are varied. A simulation parameter is subjected to fitting by a movable mirror produced by way of trial (a condition 1 : an area of 12 mm x 12 mm, a sectional area of a beam of 0.05 mm$^2$, a beam length of 4 mm and an average measured resonance frequency of 188.6 Hz, and a condition 2 : an area of 12 mm x 12 mm, a sectional area of a beam of 0.16 mm$^2$, a beam length of 5 mm and an average measured resonance frequency of 400.7 Hz), and a simulation on the other condition is thus executed. It is confirmed that swinging can be carried out with a variation in the resonance frequency from 50 Hz to 1 KHz or more by a change in the shapes of the deflecting mirror and the beam.

FIG. 11B shows a simulation result based on the condition 1, that is, a variation in the resonance frequency in the case where the length of the beam is fixed to be 4 mm and the sectional area of the beam is changed. In FIG. 11B, a sequence 1 is a deflecting mirror of 20 mm x 20 mm, a sequence 2 is a deflecting mirror of 16 mm x 16 mm, a sequence 3 is a deflecting mirror of 12 mm x 12 mm, and a sequence 4 is a movable mirror of 8 mm x 8 mm.

FIG. 11C shows a simulation result based on the condition 2, that is, a variation in the resonance frequency in the case where the length of the beam is fixed to be 5 mm and the sectional area of the beam is changed. In FIG. 11C, a sequence 1 is a deflecting mirror of 20 mm x 20 mm, a sequence 2 is a deflecting mirror of 16 mm x 16 mm, a sequence 3 is a deflecting mirror of 12 mm x 12 mm, and a sequence 4 is a movable mirror of 8 mm x 8 mm.

When the swing is carried out at a frequency of approximately 1 kHz or more for a long period of time, however, there is caused a phenomenon in which the resonance frequency is decreased by the generation of heat of the beam so that the swing amplitude is reduced.

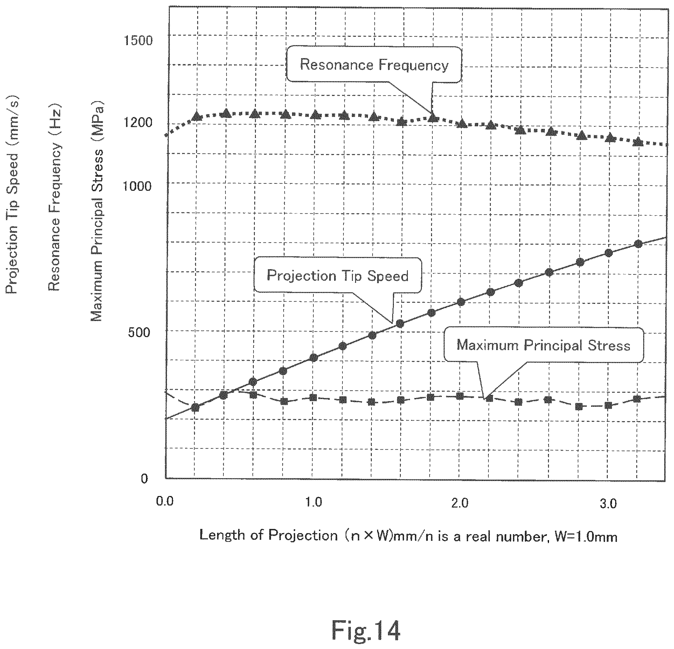

FIG. 14 shows a result obtained by analyzing, through a finite element method, a resonance frequency and a maximum principal stress in the formation of the projection 4d functioning as a radiation fin with respect to the beam. The metal bar 4a constituting the beam is set to have a width W of 1.0 mm, a length L of 4.0 mm and a thickness T of 0.25 mm, and is set to have a width W (1.0 mm), a pitch W (1.0 mm) and a length nW, that is, a value which is n times the width W of the metal bar 4a ("n" is a real number) at the left and right ends of the metal bar 4a.

The maximum principal stress represents an analytical value in the case where a mechanical angle of a deflecting mirror swung by the metal bar 4a is set to be 10 degrees. Moreover, a projection tip speed represents a speed of a tip part of a projection in the case where the length is varied to carry out swing at the machine angle of 10 degrees. In consideration of the fact that the projection 4d is formed at both of the left and right ends of the metal bar 4a, the speed of the tip part of either of the projections 4d is plotted with a doubled value.

It is indicated that the projection tip speed is increased with increase in the length of the projection and cooling ability is enhanced correspondingly. As a result of the analysis, it is apparent that the maximum principal stress is not greatly varied up to a range of approximately 3 W of the projection length and the resonance frequency is also stabilized at approximately 1200 Hz.

Also in the case where the same analysis is executed with change in the thickness T of the metal bar 4a to 0.2 mm and to 0.3 mm, the same characteristic is obtained. When the thickness T is set to be 0.2 mm, the resonance frequency is stabilized at approximately 900 Hz. When the thickness T is set to be 0.3 mm, the resonance frequency is stabilized at approximately 1500 Hz.

Based on these results, the width W is set to be 0.8 mm to 1.0 mm, the length L is set to be 4.0 mm to 9.0 mm, and the thickness T is set to be 0.25 mm, and a beam having a width of W (1.0 mm), a pitch of W (1.0 mm) and a length of 0.65 W (0.65 mm) is fabricated at the left and right ends of the metal bar 4a. A resonance experiment is carried out for the trial beam.

As a result, it is apparent that swing and driving can be executed very stably from several hundreds Hz to 1800 Hz for a long period of time. Although an upper limit of the frequency is set to be 1800 Hz in the experiment, it is guessed that stable driving can be carried out up to a higher frequency.

FIG. 7 shows a positional relationship between the metal elastic member having the fixed unit pad 4b and the movable unit pad 4c formed on the respective ends of the metal bar 4a, and the glass substrate 3a to be an upper substrate and the glass epoxy substrate 3c to be a lower substrate (for example, the deflecting mirror and the coil substrate) and the spacer 3b which constitute the movable unit 3.

At a bottom face of the upper glass substrate 3a, a first groove portion 30 is formed in an orthogonal direction to the axis P, and furthermore, paired second groove portions 31, 31 are formed in a direction along the axis P. A depth of the first groove portion 30 is slightly greater than the thickness of the movable unit pad 4c, and a depth of each of the second groove portions 31, 31 is further greater than that of the first groove portion 30.

In a state in which paired positioning pins 3P formed on the first groove portion 30 is inserted into the positioning hole portion of the movable unit pad 4c, the spacer 3b is inserted into the first groove portion 30 and is thus bonded so as to have the movable unit pad 4c sandwiched between the bottom face of the first groove portion 30 and the upper surface of the spacer 3b. Furthermore, the paired positioning pins 3P are positioned to be inserted into paired positioning hole portions formed on the glass epoxy substrate provided below so that the upper glass substrate and lower glass epoxy substrate are bonded to each other.

A metal member is provided to electrically connect both the electrode pads E formed on the coil substrate 3c and the movable unit pads 4c of the metal elastic member at both ends in the spacer 3b where the electrode pads E and the movable unit pads 4c are opposed to each other. The spacer 3b is configured by disposing an insulating member between paired metal members.

When the first groove portion 30 and the second groove portions 31, 31 are thus formed on the upper glass substrate 3a, the metal bar 4a holds its posture in a state in which it does not come in contact with the upper glass substrate 3a and lower glass epoxy substrate 3c. Consequently, it is possible to eliminate a drawback that the metal bar 4a comes in contact with the glass substrate 3a and the glass epoxy substrate 3c in a torsional operation thereof.

In addition, also in the case where the upper glass substrate 3a is caused to serve as a deflecting mirror and an area of a deflection surface is to be increased, it is not necessary to reduce the length of the metal bar 4a by employing the structure.

The connecting mode of the beam 4 and the movable unit 3 described with reference to FIGS. 5A, 5B and 7 is only illustrative and the connecting mode of the beam 4 and the movable unit 3 according to the present invention is not restricted to the structure.

For example, in the case where the movable unit pads 4c are fixed to the vicinity of edge portions of the upper glass substrate 3a and lower glass epoxy substrate 3c and the metal bar 4a is disposed so as not to be covered with the upper glass substrate 3a and lower glass epoxy substrate 3c as shown in FIG. 5C, it is sufficient that a concave portion for accommodating the movable unit pad 4c is formed on the edge portion of the upper glass substrate 3a and a spacer does not need to be provided.

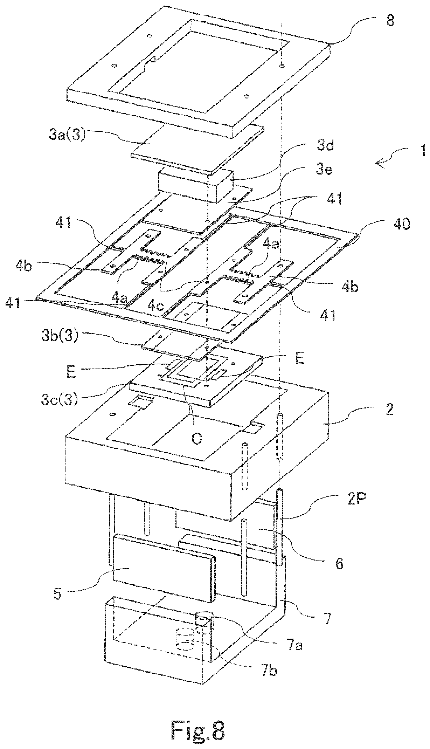

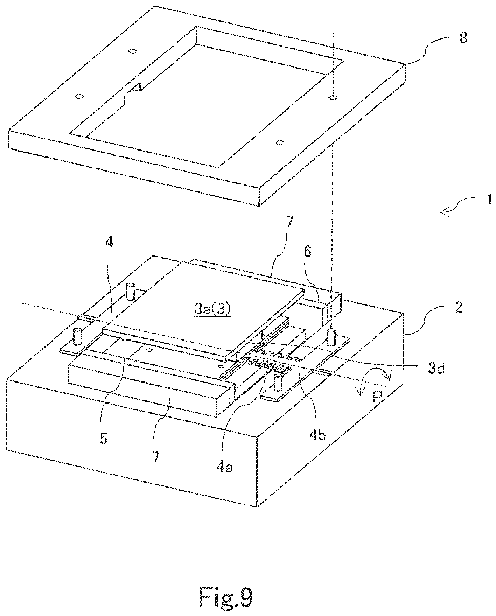

As shown in FIGS. 8 and 9, moreover, spacer members 3d and 3e formed of polycarbonate may be inserted between the deflecting mirror 3a and the movable unit pad 4c, for example, in such a manner that the deflection surface of the deflecting mirror 3a is higher than the permanent magnets 5 and 6. If the deflection surface of the deflecting mirror 3a is thus raised, there is no fear that measurement light to be deflected by the deflecting mirror 3a might be shielded by rising portions of the permanent magnets 5 and 6 in a swinging movement of the deflecting mirror 3a.

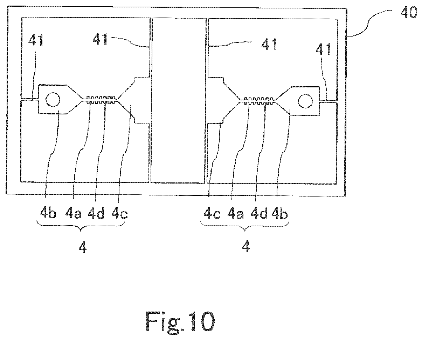

FIG. 10 shows a metal elastic member taking a different shape from the metal elastic member described above. The metal bar 4a is formed to have a width of 0.1 mm, a thickness of 0.05 mm, a length of 1.50 mm and a sectional area of 0.005 mm$^2$.

It is sufficient that the metal bar 4a constituting the metal elastic member according to the present invention is formed to have a sectional area of 1 mm$^2$ or less, and the width, the thickness and the length can be set properly. Moreover, the shapes of the fixed unit pad 4b and the movable unit pad 4c are not particularly restricted but are preferably adapted to a miniature machine into which they are to be incorporated.

The intended use of the miniature machine according to the present invention is not restricted to a scanning type distance measuring device but can be applied to a device requiring to scan with light, for example, a projector or a laser printer. For instance, it is possible to implement an image forming engine such as a projector, a laser printer, and the like by assembling a light emitting device to the upper glass substrate 3a constituting the movable unit 3 and controlling a light emitting state of the light emitting device while swinging the miniature machine in an orthogonal direction to a scanning direction depending on a scanning angle.

Furthermore, the metal elastic member and the miniature machine according to the present invention are also suitable as a sample of a metal fatigue test which can carry out a high speed test.

A general fatigue testing device executes a test in a repetition cycle at 10Hz, and approximately 100 Hz at a maximum. Therefore, a high cycle fatigue is evaluated approximately one million times to ten million times. Also in a 100 Hz test, therefore, the evaluation is carried out one million times in approximately three hours to ten million times in approximately two days.

If an extra-high cycle fatigue noted in recent years is evaluated one hundred million times to one billion times, however, there is required a duration which is 10 times to one hundred times the duration required for the general fatigue testing device. Consequently, a test should be carried out 290 million times in one month by means of a 100 Hz testing machine, and an expensive testing device should be occupied yearly in respect of a property of a fatigue test in which a plurality of tests is executed.

Furthermore, a cooling mechanism is indispensable to a higher speed testing machine, and it is necessary to examine reliability of the result of the test because a characteristic of a sample itself is reduced remarkably with a rise in the temperature of the sample.

On the other hand, referring to the metal elastic member and the miniature machine according to the present invention, it is confirmed that a swing operation is carried out 12.6 billion times with total amplitude of 45 degrees at a resonance frequency of 400 Hz by means of a mirror having a size of 12 mm by 10 mm. It is also possible to design a metal elastic member which executes a swing operation at a higher frequency than 1 KHz and a miniature machine. Consequently, the metal elastic member and the miniature machine according to the present invention are provided for the fatigue test sample. Thus, it is possible to implement a high speed test having a speed which is four to ten times as high as that of a conventional general fatigue testing device.

In the present invention, it is possible to accurately read a deflection angle through a laser and to execute a plurality of tests at the same time by assembling a small-sized specimen as a light deflecting device, for example. Since the operation is executed in a shape of a self-cooling mechanism, furthermore, it is not necessary to use a special cooling device. By previously clarifying a relationship between a torsional angle and a generated stress, it is possible to obtain a result of an experiment very inexpensively, quickly and accurately.

Although the description has been given of the miniature machine 1 including the single movable unit 3 supported by paired beams 4, 4 in the embodiment, it is also possible to employ a structure in which the single miniature machine 1 is provided with the single movable unit 3 supported by paired beams 4, 4 in plural sets.

In the embodiments, the description has been given to the metal elastic member in which the fixed unit pad 4b is provided at the first end of the metal bar 4a and the movable unit pad 4c is provided at the second end of the metal bar 4a. However, it is sufficient that the metal elastic member according to the present invention includes a metal bar having a predetermined length which swings the movable unit, and a fixed unit pad that is provided at a first end of the metal bar and is fixed to the fixed unit, and a plurality of projections should be formed in extension in an intersecting direction with a torsional rotation axis.

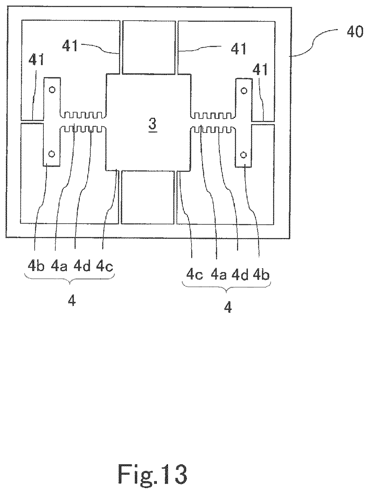

For example, as shown in FIG. 13, the paired metal bars 4a may be formed integrally through a movable unit attaching portion 3a and the f'ixed unit pad 4b may be formed at both ends of the integrated metal bar 4a respectively. In FIG. 13, fabrication can be carried out in the same fabrication process as that described with reference to FIGS. 2A to 2D. In the drawing, the reference numeral 41 denotes a support unit for fixing a metal elastic member to a frame 40.

Although the permanent magnet is provided as the magnetic field forming unit in the fixed unit and the coil is provided in the movable unit in the embodiments, the permanent magnet may be provided in the movable unit and the coil may be provided in the fixed unit. Also in this case, it is possible to drive the movable unit by application of alternating current to the coil to generate Lorentz force.

By providing the coil in both the fixed unit and the movable unit, applying direct current to one of the coils to cause the coil to act as the magnetic field forming unit and applying alternating current to the other coil to generate the Lorentz force, it is possible to drive the movable unit.

Furthermore, a method of driving the movable unit is not restricted to the driving method using the Lorentz force but it is also possible to use a method of carrying out driving by electrostatic force with an electrode provided in each of the fixed unit and the movable unit, for example.

In the embodiments, the description has been given to an example of the metal elastic member and the miniature machine using the metal elastic member according to the present invention. The technical range of the present invention is not restricted to the description but it is a matter of course that a specific shape, size and pitch of the projection and the like can be set properly within a range in which the functions and effects of the present invention can be produced.

**Claims**

1. A metal elastic member to be used for paired beams (4) for supporting a movable unit (3) at respective ends with respect to a fixed unit (2) in a miniature machine including at least one movable unit, the fixed unit and the beams, and capable of swinging the movable unit about an axis (P) with the beams serving as torsional rotation axes, wherein

the metal elastic member includes a metal bar (4a) having a predetermined length for swinging the movable unit, and a fixed unit pad (4b) that is provided at a first end of the metal bar for fixing to the fixed unit, and a movable unit pad (4c) that is provided at a second end of the metal bar for fixing to the movable unit and

at least the metal bar is configured by any of metals including a stainless material, a carbon tool steel material, and a cold-reduced carbon steel sheet which are rolled by a tension annealing method, and is formed to have a sectional area of 1 mm$^2$ or less and is formed to have a plurality of projections (4d) at a plurality of positions along the metal bar which function as radiation fins , the projections extending in an intersecting direction with the torsional rotation axes , that is, the longitudinal direction of the metal bar (4a); wherein the metal bar is formed by using a physical or chemical processing method excluding a press processing method,

wherein a maximum width of the projections is set to be equal to or smaller than 1.5 times a width of the metal bar and a maximum length of the projections is set to be equal to or smaller than three times the width of the metal bar.

2. The metal elastic member according to claim 1, **characterized in that** a spring constant of the metal bar is regulated into a range of ±5 % of a spring constant of a metal bar having no projection formed thereon.

3. The metal elastic member according to any one of claims 1 to 2, **characterized in that** a pair of the metal bars are symmetrically disposed on a straight line so that the fixed pad and the movable unit pad correspond respectively to the fixed unit and the movable unit of the miniature machine.

4. The metal elastic member according to any one of claims 1 to 3, **characterized in that** the movable unit pad formed in pair of the metal bar respectively is composed in a body.

5. The metal elastic member according to any one of claims 1 to 4, **characterized in that** the physical or chemical processing method includes a focused ion beam method, an etching method, and a plating method.

6. A miniature machine including at least one movable unit, a fixed unit and paired beams for supporting the movable unit at the respective ends with respect to the fixed unit, and capable of swinging the movable unit about an axis with the beams serving as torsional rotation axes,
and the beams are configured by the metal elastic member according to any one of claims 1 to 5.

7. The miniature machine according to claim 6, **characterized in that**
a coil (C) is formed in the movable unit, a magnetic field forming unit (5, 6) is provided in the fixed unit, and the movable unit is constituted to execute swing by electromagnetic force generated by current flowing to the coil and a magnetic field formed by the magnetic field forming unit, and
the beam serves as a supporter of the movable unit, a conductor for flowing current to the coil, and a spring for returning the movable unit to a reference position.

8. The miniature machine according to claim 6, **characterized in that**
a magnetic field forming unit is provided in the movable unit, a coil is provided in the fixed unit, and the movable unit is constituted to execute swing by electromagnetic force generated by current flowing to the coil and a magnetic field formed by the magnetic field forming unit, and
the beam serves as a supporter of the movable unit and a spring for returning the movable unit to a reference position.

9. The miniature machine according to claim 7 or 8, **characterized in that** the movable unit is provided with a light deflecting surface for reflecting incident light to scan and the miniature machine is designed to be used for a range finder that measures a distance based on a measured light scanned on the light deflecting surface.

**Patentansprüche**

1. Elastisches Metallelement zur Verwendung für gepaarte Balken (4) zum Tragen einer bewegbaren Einheit (3) an jeweiligen Enden mit Bezug zu einer festen Einheit (2) in einer Miniaturmaschine, die wenigstens eine bewegbare Einheit, die feste Einheit und die Balken umfasst, und die dazu ausgelegt ist, die bewegbare Einheit um eine Achse (P) zu schwenken, wobei die Balken als Torsionsdrehachsen dienen, wobei,
das elastische Metallelement eine Metallstange (4a) mit einer vorbestimmten Länge zum Schwenken der bewegbaren Einheit aufweist, und ein Feste-Einheit-Plättchen (4b), das an einem ersten Ende der Metallstange zur Befestigung der festen Einheit vorgesehen ist, sowie ein Bewegbare-Einheit-Plättchen (4c), das an einem zweiten Ende der Metallstange zum Befestigen der bewegbaren Einheit vorgesehen ist, und wobei wenigstens die Metallstange mit einem Metall gebildet ist, einschließlich eines rostfreien Materials, eines Kohlenstoffwerkzeugstahlmaterials und eines kaltgewalzten Kohlenstoffstahlblechs, die durch ein Spannungsglühverfahren gewalzt sind, und derart gebildet ist, dass sie eine Querschnittsfläche von 1mm$^2$ oder weniger hat und mit einer Mehrzahl von Vorsprüngen (4d) an einer Mehrzahl von Positionen entlang der Metallstange gebildet ist, die als Strahlungsrippen fungieren, wobei sich die Vorsprünge in eine Schnittrichtung mit den Torsionsdrehachsen erstrecken, das heißt, mit der Längsrichtung der Metallstange (4a); wobei die Metallstange unter Verwendung eines physikalischen oder chemischen Verarbeitungsverfahrens mit Ausnahme eines Pressverarbeitungsverfahrens gebildet ist,

wobei eine maximale Breite der Vorsprünge kleiner oder gleich 1,5 mal eine Breite der Metallstange eingestellt ist, und eine maximale Länge der Vorsprünge kleiner oder gleich 3 mal die Breite der Metallstange eingestellt ist.

2. Elastisches Metallelement nach Anspruch 1, **dadurch gekennzeichnet, dass** eine Federkonstante der Metallstange in einem Bereich von ±5 % einer Federkonstante einer Metallstange einreguliert ist, die keinen darauf gebildeten Vorsprung hat.

3. Elastisches Metallelement nach einem der Ansprüche 1 bis 2, **dadurch gekennzeichnet, dass** ein Paar von den Metallstangen symmetrisch auf einer geraden Linie derart angeordnet sind, dass das Feste-Einheit-Plättchen und das Bewegbare-Einheit-Plättchen der festen Einheit beziehungsweise der bewegbaren Einheit der Miniaturmaschine entsprechen.

4. Elastisches Metallelement nach einem der Ansprüche 1 bis 3, **dadurch gekennzeichnet, dass** das Bewegbare-Einheit-Plättchen, das als Paar bei der Metallstange gebildet ist, jeweils in einem Körper gebildet ist.

5. Elastisches Metallelement nach einem der Ansprüche 1 bis 4, **dadurch gekennzeichnet, dass** das physikalische oder chemische Verarbeitungsverfahren ein fokussiertes Ionenstrahlverfahren, ein Ätzverfahren und ein Plattierverfahren enthält.

6. Miniaturmaschine, umfassend wenigstens eine bewegbare Einheit, eine feste Einheit und gepaarte Balken zum Tragen der bewegbaren Einheit an den jeweiligen Enden mit Bezug zu der festen Einheit, und die dazu ausgelegt ist, die bewegbare Einheit um eine Achse zu schwenken, wobei die Balken als Torsionsdrehachsen dienen, und wobei die Balken mit dem elastischen Metallelement nach einem der Ansprüche 1 bis 5 gebildet sind.

7. Miniaturmaschine nach Anspruch 6, **dadurch gekennzeichnet, dass** eine Spule (C) in der bewegbaren Einheit gebildet ist, eine Magnetfeldbildungseinheit (5, 6) in der festen Einheit vorgesehen ist, und dass die bewegbare Einheit dazu ausgelegt ist, eine Schwenkung durch eine elektromagnetische Kraft zu bewirken, die erzeugt wird durch einen Strom, der zu der Spule fließt und ein Magnetfeld, dass durch die Magnetfeldbildungseinheit gebildet wird, und

wobei der Balken als ein Träger der bewegbaren Einheit dient, als ein Leiter zum Leiten von Strom zu der Spule, und als eine Feder zum Rückstellen der bewegbaren Einheit in eine Referenzposition.

8. Miniaturmaschine nach Anspruch 6, **dadurch gekennzeichnet, dass** eine Magnetfeldbildungseinheit in der bewegbaren Einheit vorgesehen ist, eine Spule in der festen Einheit vorgesehen ist, und dass die bewegbare Einheit dazu ausgelegt ist, eine Schwenkung durch eine elektromagnetische Kraft zu bewirken, die erzeugt wird durch Strom, der zu der Spule fließt, und ein Magnetfeld, das durch die Magnetfeldbildungseinheit gebildet wird, und

der Balken als ein Träger der bewegbaren Einheit und als eine Feder zum Rückstellen der bewegbaren Einheit zu einer Referenzposition dient.

9. Miniaturmaschine nach Anspruch 7 oder 8, **dadurch gekennzeichnet, dass** die bewegbare Einheit mit einer Lichtablenkoberfläche zum Reflektieren von einfallendem Licht zum Scannen vorgesehen ist, und dass die Miniaturmaschine dazu ausgelegt ist, als ein Entfernungsmesser verwendet zu werden, der eine Entfernung basierend auf einem Messlicht misst, das auf der Lichtablenkoberfläche gescannt wird.

**Revendications**

1. Organe élastique en métal à utiliser pour des poutres en paire (4) pour supporter une unité mobile (3) au niveau d'extrémités respectives par rapport à une unité fixe (2) dans une machine miniature comportant au moins une unité mobile, l'unité fixe et les poutres, et capable de faire osciller l'unité mobile autour d'un axe (P), les poutres servant d'axes de rotation en torsion,
dans lequel
l'organe élastique en métal comporte une barre en métal (4a) ayant une longueur prédéterminée pour faire osciller l'unité mobile, et un tampon d'unité fixe (4b) qui est prévu au niveau d'une première extrémité de la barre en métal pour fixation à l'unité fixe, et un tampon d'unité mobile (4c) qui est prévu au niveau d'une seconde extrémité de la barre en métal pour fixation à l'unité mobile et

au moins la barre en métal est configurée par l'un quelconque parmi des métaux comportant un matériau inoxydable, un matériau en acier carbone, et une tôle en acier carbone laminée à froid qui sont laminés par un procédé de recuit en tension, et est formée pour avoir une aire en coupe de 1 mm$^2$ ou moins et est formée pour avoir une pluralité de saillies (4d) à une pluralité de positions le long de la barre en métal qui servent d'ailettes de rayonnement, les saillies s'étendant dans une direction d'intersection avec les axes de rotation en torsion, c'est-à-dire, la direction longitudinale de la barre en métal (4a) ; dans lequel la barre en métal est formée en utilisant un procédé de traitement physique ou chimique à l'exclusion d'un procédé de traitement à la presse,

dans lequel une largeur maximale des saillies est réglée pour être inférieure ou égale à 1,5 fois une largeur de la barre en métal et une longueur maximale des saillies est réglée pour être inférieure ou égale à trois fois la largeur de la barre en métal.

2. Organe élastique en métal selon la revendication 1, **caractérisé en ce qu'**une constante de rappel de la barre en métal est régulée dans une plage de ±5% d'une constante de rappel d'une barre en métal sur laquelle aucune saillie n'est formée.

3. Organe élastique en métal selon l'une quelconque des revendications 1 et 2, **caractérisé en ce qu'**une paire des barres en métal est disposée symétriquement sur une ligne droite de sorte que le tampon d'unité fixe et le tampon d'unité mobile correspondent respectivement à l'unité fixe et à l'unité mobile de la machine miniature.

4. Organe élastique en métal selon l'une quelconque des revendications 1 à 3, **caractérisé en ce que** le tampon d'unité mobile formé dans une paire des barres en métal respectivement est composé dans un corps.

5. Organe élastique en métal selon l'une quelconque des revendications 1 à 4, **caractérisé en ce que** le procédé de traitement physique ou chimique comporte un procédé par faisceaux d'ions focalisé, un procédé de gravure, et un procédé de placage.

6. Machine miniature comportant au moins une unité mobile, une unité fixe, et des poutres en paire pour supporter l'unité mobile au niveau des extrémités respectives par rapport à l'unité fixe, et capable de faire osciller l'unité mobile autour d'un axe, les poutres servant d'axes de rotation en torsion,

et les poutres sont configurées par l'organe élastique en métal selon l'une quelconque des revendications 1 à 5.

7. Machine miniature selon la revendication 6, **caractérisée en ce que**

une bobine (C) est formée dans l'unité mobile, une unité de formation de champ magnétique (5, 6) est prévue dans l'unité fixe, et l'unité mobile est constituée pour exécuter une oscillation par une force électromagnétique générée par un courant circulant jusqu'à la bobine et un champ magnétique formé par l'unité de formation de champ magnétique, et

la poutre sert d'organe de support de l'unité mobile, de conducteur pour le courant circulant jusqu'à la bobine, et de ressort pour renvoyer l'unité mobile à une position de référence.

8. Machine miniature selon la revendication 6, **caractérisée en ce que**

une unité de formation de champ magnétique est prévue dans l'unité mobile, une bobine est prévue dans l'unité fixe, et l'unité mobile est constituée pour exécuter une oscillation par une force électromagnétique générée par un courant circulant jusqu'à la bobine et un champ magnétique formé par l'unité de formation de champ magnétique, et

la poutre sert d'organe de support de l'unité mobile et de ressort pour renvoyer l'unité mobile à une position de référence.

9. Machine miniature selon la revendication 7 ou 8, **caractérisée en ce que** l'unité mobile est pourvue d'une surface de déviation de lumière pour réfléchir une lumière incidente afin de balayer et la machine miniature est conçue pour être utilisée pour un télémètre qui mesure une distance d'après une lumière mesurée balayée sur la surface de déviation de lumière.

Fig.1

Fig.2A

Fig.2B

Fig.2C

Fig.2D

Fig.2E

Fig.3A

Fig.3B

Fig.3C

Fig.4

Fig.5A

Fig.5B

Fig.5C

Fig.6

Fig.7

Fig.8

Fig.9

Fig.10

Fig.11A

Fig.11B

Fig.11C

Fig.12A

Fig.12B

Fig.13

Fig.14

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2003084226 A
- JP 9281417 A
- JP 2009175368 A
- US 6201629 B1
- US 5982521 A
- US 2007268950 A1
- US 2003006360 A1
- US 2008239446 A1
- JP 2001226718 A
- JP 2011191422 A
- JP 2007206670 A
- JP 2012247796 A